# EUROPÄISCHE PATENTSCHRIFT

(11) **EP 4 020 730 B1**
(45) Veröffentlichungstag und Bekanntmachung des Hinweises auf die Patenterteilung: **05.11.2025**
(21) Anmeldenummer: 21209236.5
(22) Anmeldetag: 19.11.2021
(51) Int. Cl.: H02G 9/10, E04H 5/06, E02D 29/12

(54) **SCHACHT MIT EINER BODENPLATTE UND BODENPLATTE FÜR EINEN KUNSTSTOFFSCHACHT**
SHAFT WITH A BASE PLATE AND BASE PLATE FOR A PLASTIC SHAFT
GAINE POURVUE DE PLAQUE DE FOND ET PLAQUE DE FOND POUR UNE GAINE EN MATIÈRE PLASTIQUE

(30) Priorität: 21.12.2020 DE 102020134373
(43) Veröffentlichungstag der Anmeldung: 29.06.2022
(73) Patentinhaber: Langmatz GmbH, 82467 Garmisch-Partenkirchen (DE)
(72) Erfinder: Jais, Stefan, 82481 Mittenwald (DE); Hutter, Michael, 82467 Unterammergau (DE)
(74) Vertreter: Flosdorff, Jürgen

(56) Entgegenhaltungen:
- EP-A1- 3 258 757
- CN-A- 109 537 633
- DE-U1- 9 208 786
- LANGMATZ GMBH: "Kabelsch�chte aus Kunststoff | Unterflurverteiler", 1 June 2018 (2018-06-01), pages 1 - 189, XP055922029, Retrieved from the Internet <URL:https://www.rpkh-gmbh.de/app/download/23298533/Langmatz+Kabelsch%C3%A4chte+Gesamtprospekt.pdf> [retrieved on 20220517]

## Beschreibung

Die Erfindung betrifft einen aus Kunststoff bestehenden Schacht mit Schachtwänden und mit einer Bodenplatte. Bisher wird die Bodenplatte - sofern eine solche in dem Schacht vorgesehen ist - unbefestigt auf den Schachtboden gelegt und hat üblicherweise eine glatte oder geriffelte Oberfläche.

Wenn in dem Schacht Arbeiten an darin untergebrachten elektrischen/elektronischen Bauteilen, Kabeln oder Geräten auszuführen sind, steht oder kniet ein Monteur auf dem Boden des Schachtes und führt so die erforderlichen Arbeiten aus. Dabei ist es wichtig, dass er auf dem Boden einen sicheren Stand hat. Dies muss auch gewährleistet sein, wenn der Monteur bei widrigen Wetterbedingungen und nasser Umgebung des Schachtes mit verschmutzten und/oder rutschigen Schuhen in dem Schacht steht. Außerdem ist es wichtig, dass sich die Bodenplatte - sofern sie vorhanden ist - bei allen bei der Arbeit des Monteurs auftretenden Belastungen in dem Schacht nicht verschiebt.

Aus dem Prospekt "Kabelschächte aus Kunststoff | Unterflurverteiler'' der Anmelderin vom 1. Juni 2018 sind Kabelschächte mit Schachtwänden und einer viereckigen Bodenplatte bekannt, die an ihrer Oberseite eine Vielzahl von über ihre Fläche verteilte innen hohle Erhebungen und an ihren Randbereichen jeweils wenigstens eine Aussparung aufweist, in die jeweils ein Fußabschnitt einer aus Metall bestehenden Befestigungslasche eingeschoben ist, die am unteren Randbereich der Schachtwände mit Befestigungsmitteln befestigt ist.

Die DE 92 08 786 U1 offenbart einen Kabelschacht aus Kunststoff mit einer Bodenplatte, die eine umlaufende Nut für das Einsetzen der Schachtwände und auf jeder Seite einen von der Oberseite abstehenden Bügel mit Schlitzen aufweist, die von Schrauben durchgriffen werden, die in die Schachtwände eingeschraubt werden.

Die EP 3 258 757 A1 offenbart einen Schacht, bei dem die Schachtwände auf Randprofile einer gerippten Bodenplatte aufgesetzt sind.

Bei einem aus CN 109537633 A bekannten Schacht sind die Schachtwände durch Laschen und einen Riegel an einer Bodenplatte befestigt.

Der vorliegenden Erfindung liegt die Aufgabe zugrunde, eine Bodenplatte für einen Kunststoffschacht anzugeben, die unverschieblich in dem Schacht befestigt, und so gestaltet ist, dass sie einem Monteur bei allen auftretenden Belastungen einen sicheren Stand verleiht. Dabei soll die Bodenplatte auf einfache Weise in dem Schacht befestigbar sein.

Diese Aufgabe wird erfindungsgemäß bei einem Kunststoffschacht durch die Merkmale des Patentanspruchs 1 gelöst.

Vorteilhafte Ausgestaltungen der Erfindung sind in den Unteransprüchen gekennzeichnet.

Die Erfindung sieht vor, dass die Bodenplatte an ihrer Oberseite eine Vielzahl von über ihre Fläche verteilte, innen hohle Erhebungen und an ihren Randbereichen jeweils wenigstens eine taschenartige Aussparung aufweist, in die jeweils ein Fußabschnitt einer Befestigungslasche eingesetzt bzw. eingeschoben ist, wobei die Befestigungslasche am unteren Randbereich der Schachtwände mit Befestigungsmitteln befestigt ist. Durch die Vielzahl von gleichmäßig über die Fläche der Bodenplatte verteilten Erhebungen, die bevorzugt schachbrettartig angeordnet sind, ist ein rutschfester Stand einer Arbeitsperson bzw. eines Monteurs in dem Schacht bei Arbeiten beispielsweise an elektrischen/elektronischen Leitungen und Geräten in dem Schacht gewährleistet, wobei die Oberseite der Erhebungen zur weiteren Verbesserung des Antirutsch-Verhaltens kleine Vorsprünge wie vorstehende Linien, Punkte etc. aufweisen kann. Zwischen den Erhebungen verbleibt ausreichend Platz zur Ablagerung von Schmutz oder Erdkrusten, die bei schlechten Witterungsverhältnissen an den Schuhen des Monteurs haften und in den Schacht getragen werden.

Außerdem ist erfindungsgemäß die Bodenplatte am unteren Randbereich der Schachtwände mit Befestigungsmitteln fixiert, wozu in den Randbereichen der Bodenplatte taschenartige Aussparungen vorgesehen sind, in die Fußabschnitte von Befestigungslaschen eingeschoben werden. Auf diese Weise kann die erfindungsgemäße Bodenplatte auf einfache Weise unter den beengten räumlichen Verhältnissen in dem Schacht am unteren Randbereich der Schachtwände befestigt werden.

In einer bevorzugten Ausführungsform haben die Erhebungen eine rechteckige Quaderform mit gerundeten Kanten, die gewährleisten, dass sich die Schuhe eines Monteurs nicht an den Erhöhungen bzw. Erhebungen verhaken können.

Erfindungsgemäß ist vorgesehen, dass die Befestigungslaschen einen ringförmigen Abschnitt haben, der über einen mittigen Verbindungsabschnitt mit dem Fußabschnitt verbunden ist. Die Befestigungslaschen sind einstückig aus Kunststoff ausgebildet. Der Fußabschnitt der Befestigungslasche hat eine flügelartige Form, und die taschenartige Aussparung weist zwei getrennte beidseitige Taschen auf, in die der flügelartige Fußabschnitt eingeschoben wird. Auf diese Weise kann die Befestigungslasche zwangsläufig in die korrekte Endposition in der Bodenplatte eingeschoben werden, in der ihr Fußabschnitt einrastet. Die Befestigungslaschen können auf diese Weise auch vertikale Kräfte auf die Schachtwände übertragen, wenn die Bodenplatte nicht ganzflächig auf dem Untergrund aufliegt, was dann der Fall sein kann, wenn der Untergrund nicht betoniert ist, sondern aus verdichtetem Erdreich besteht.

Mit großem Vorteil wird vorgeschlagen, dass der ringförmige Abschnitt der Befestigungslasche von einem bevorzugt aus Kunststoff bestehenden Dübel durchgriffen wird, der in ein vorbereitetes Loch in der Schachtwand eingeschlagen wird. Dies ist von einem Monteur schnell und einfach zu bewerkstelligen.

Außerdem kann mit großem Vorteil vorgesehen sein, dass wenigstens eine Erhebung mit einem inneren Dom versehen ist, an dem Einbauten im Schachtinneren mit Hilfe einer selbstschneidenden Schraube, bevorzugt einer Kunststoffschraube, befestigbar sind. Dabei sind vorzugsweise mehrere solche innere Dome an Erhebungen vorgesehen, an deren Oberseite ein Loch in den inneren Dom führt.

Nach einem weiteren wesentlichen Gesichtspunkt der Erfindung ist die Bodenplatte im Spritzgießverfahren hergestellt, und zwar bevorzugt aus PC oder PP.

Kunststoffschächte werden in verschiedenen Rechteckformen und Rechteckgrößen hergestellt. Um für die üblicherweise anzutreffenden Ausführungsformen jeweils eine kostengünstige passende Bodenplatte bereit zu stellen, sieht die Erfindung vor, dass eine Bodenplatte mit den oben beschriebenen Merkmalen wenigstens eine solche Größe hat, die mit der Bodenfläche des größten Schachtes übereinstimmt, und dass kleinere Bodenplatten aus der großen Bodenplatte zurecht geschnitten werden. Hierzu wird vorgeschlagen, dass an den Rändern der größten Bodenplatte rechtwinklige Kerben als Anschlag für Sägeblätter verschiedener Dicke ausgebildet sind, mit denen die gewünschte Bodenplatte auf das jeweilige Maß gesägt werden kann. Da die Bodenplatte bevorzugt aus PC oder PP besteht, können die dabei anfallenden überschüssigen Bodenplattenteile für den Herstellungsprozess wieder verwendet werden.

Die Erfindung sieht somit eine kostengünstig herstellbare Bodenplatte für einen Schacht vor, die auf einfache Weise an den Schachtwänden befestigbar ist und einer Arbeitsperson in dem Schacht einen sicheren rutschfreien Stand gewährt.

Weitere Einzelheiten der Erfindung ergeben sich aus der nachfolgenden Beschreibung einer bevorzugten Ausführungsform sowie anhand der Zeichnungen. Dabei zeigen:
- Figur 1: eine perspektivische Ansicht einer Bodenplatte;
- Figur 2: eine Befestigungslasche mit einem Dübel in vergrößerter Darstellung;
- Figur 3: eine zugeschnittene Bodenplatte mit Befestigungslaschen;
- Figur 4: das Einstecken der Befestigungslasche in die Bodenplatte;
- Figur 5: das Einschnappen der Befestigungslasche;
- Figur 6: den Fußabschnitt einer Befestigungslasche mit Erhöhungen zum Einschnappen;
- Figur 7: eine Erhebung mit einem Anschraubpunkt von oben;
- Figur 8: den Dom als Anschraubpunkt von unten;
- Figur 9: die Verlängerung der Bodenplatte mit Hilfe eines Verbinders;
- Figur 10: rechtwinklige Kerben an den Außenrändern der Bodenplatte;
- Figur 11: die Befestigung einer Bodenplatte an dem unteren Rahmenteil eines Kunststoffschachtes;
- Figur 12: den in Taschen eingeschobenen Fußabschnitt einer Befestigungslasche.

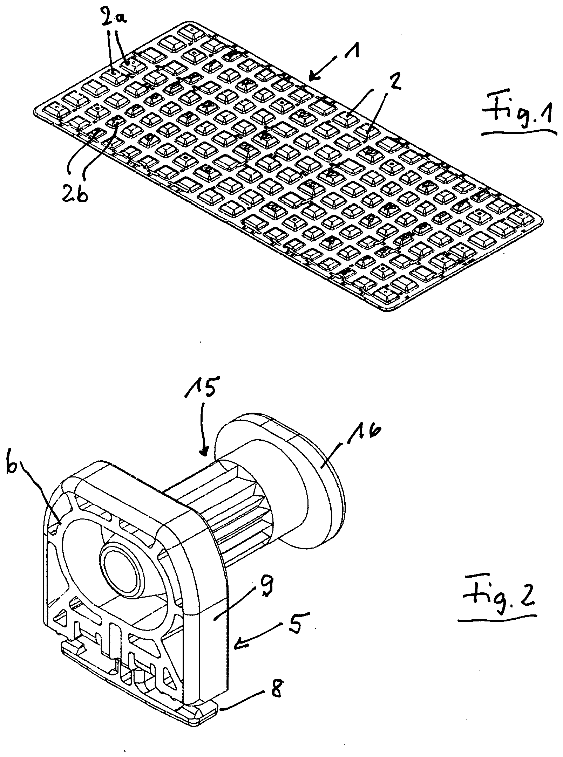

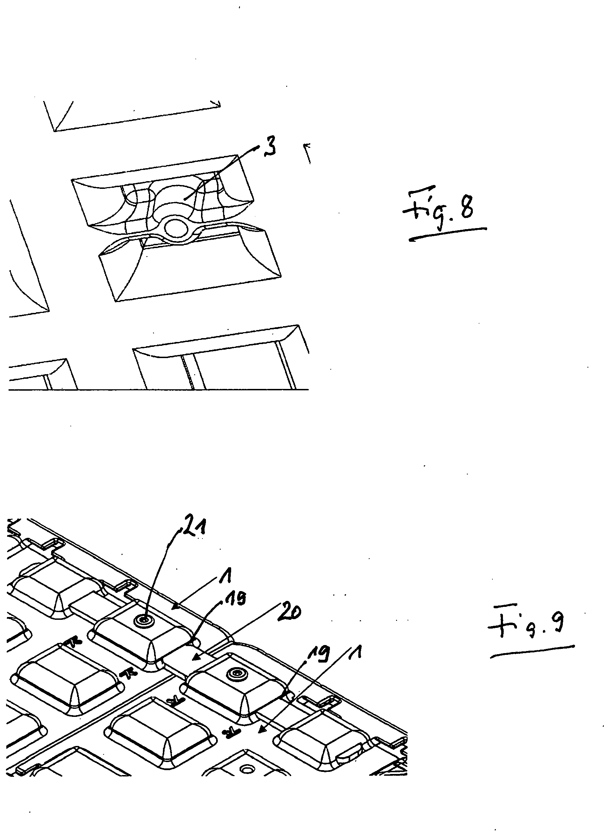

Figur 1 zeigt eine große Bodenplatte 1, die durch Spritzgießen aus PC oder PP hergestellt ist. Die Bodenplatte enthält eine Vielzahl von innen hohle Erhebungen 2, die die Form eines rechteckigen Quaders mit gerundeten Kanten haben. Die Erhebungen sind schachbrettartig über die gesamte Fläche der Bodenplatte 1 verteilt. Einige Erhebungen 2a enthalten mittige Löcher, die zu einem innen liegenden Dom 3 führen (Figur 8), in den selbstschneidende Schrauben einschraubbar sind, um Einbauten des Schachtes zu befestigen. Andere Erhebungen 2b sind an ihrer Oberseite mit eingeprägten Logos versehen, um die Rutschfestigkeit der Bodenplatte 1 zu erhöhen. In den Zwischenräumen zwischen den Erhebungen 2 können an den Schuhen eines Monteurs mitgeführte Verunreinigungen abgelagert werden.

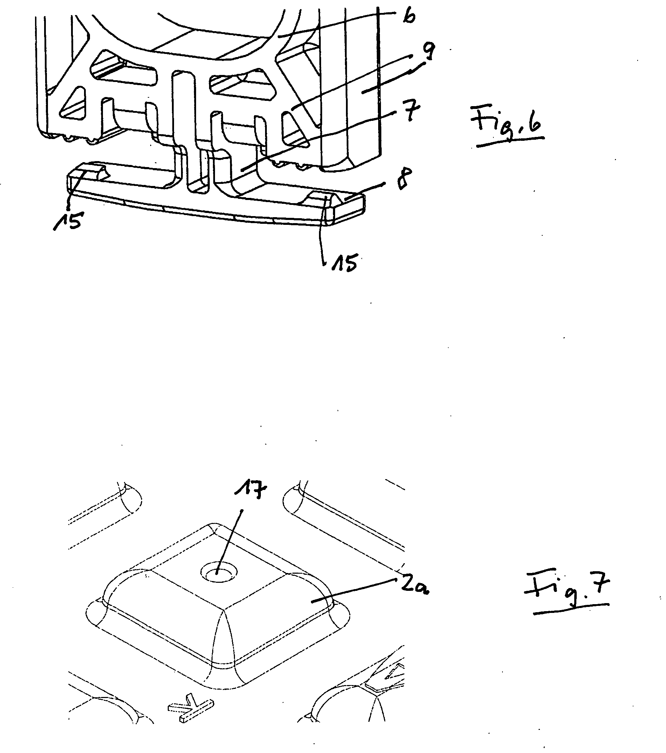

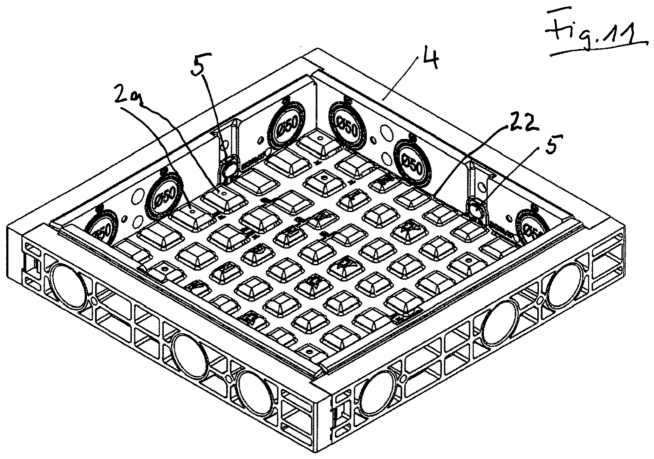

Figur 2 zeigt eine Befestigungslasche 5, mit deren Hilfe eine Bodenplatte 1 am untersten Element 4 (Figur 11) eines Kunststoffkabelschachtes befestigt werden kann. Die Befestigungslasche 5 besteht aus einem oberen ringförmigen Abschnitt 6, der über einen mittigen schmalen Verbindungsabschnitt 7 mit einem Fußabschnitt 8 verbunden ist, wie insbesondere Figur 6 zeigt. Die Befestigungslasche 5 enthält außerdem Verstärkungsstreben 9 und ist einstückig aus Kunststoff hergestellt.

Der Fußabschnitt 8 enthält eine flügelartige Form, die sich von dem mittigen Verbindungsabschnitt 7 rechtwinklig zu beiden Seiten hin erstreckt.

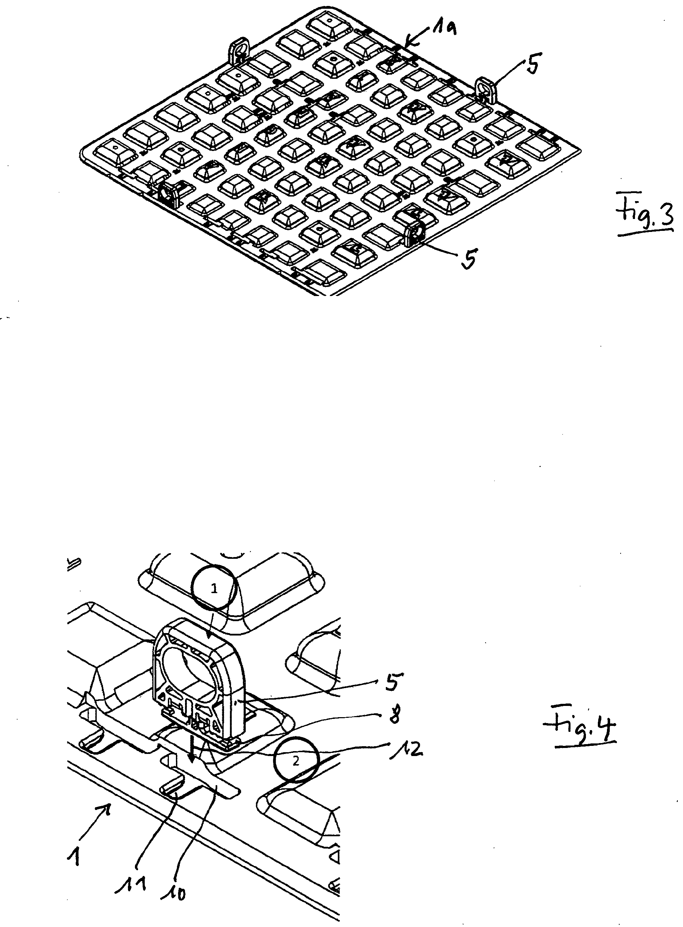

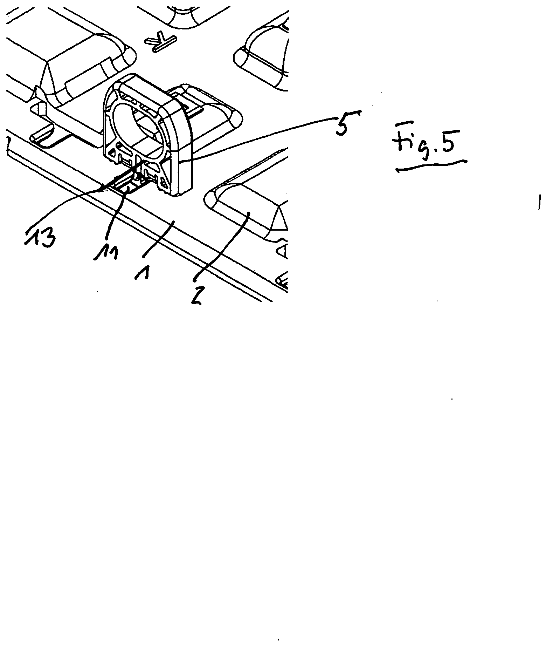

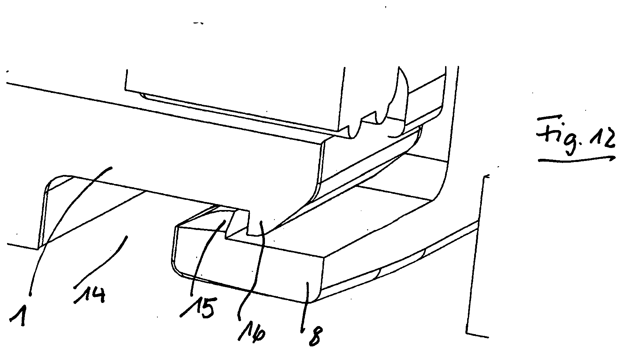

Wie Figur 4 zeigt, enthält die Bodenplatte 1 in ihrem Randbereich eine Aussparung 10, die etwas größer als der Fußabschnitt 8 ist, der in diese Aussparung 10 eingesetzt werden kann. Die Aussparung 10 setzt sich in einem mittigen, ebenfalls oben offenen Abschnitt 11 fort, der etwas breiter als der mittige Verbindungsabschnitt 7 ist. Rechts und links von diesem mittigen Abschnitt 11 sind Taschen in der Bodenplatte 1 ausgebildet, die insgesamt dieselbe Breite wie die Aussparung 10 haben und die unter die Bodenplatte 1 führen, so dass der Fußabschnitt 8 schräg nach unten in den offenen mittigen Bereich und in die beiden oben von der Bodenplatte überdeckten Taschen einschiebbar ist. In Figur 4 ist das Einsetzen der Befestigungslasche 5 in die Aussparung 10 durch einen Pfeil 12 angedeutet, während der Pfeil 13 in Figur 5 das Einschieben der Befestigungslasche 5 in die Tasche 14 andeuten. Figur 12 zeigt den in die Taschen 14 eingeschobenen Fußabschnitt 8 in einer geschnittenen Darstellung, die stark vergrößert ist.

Figur 3 zeigt eine Bodenplatte 1a, die aus der großen Bodenplatte 1 der Figur 1 ausgeschnitten ist. An den vier Randbereichen der quadratischen Bodenplatte 1a ist jeweils eine Befestigungslasche 5 in ihre Endposition eingeschoben, in der sie in den Taschen 14 eingeschnappt sind. Die Laschen 5 werden mit Hilfe des in Figur 2 dargestellten Kunststoffdübels 15 an dem unteren Element 4 eines Kunststoffkabelschachtes befestigt, der mit Hilfe eines Hammers in ein vorgefertigtes Loch in der Wand des Kunststoffschachtes eingeschlagen wird, bis der Fuß 16 des Dübels an dem ringförmigen Abschnitt 6 der Befestigungslasche 5 anliegt. Die Bodenplatte 1 ist dabei in eine umlaufende Nut 22 eingesetzt (Figur 11).

Figur 6 zeigt, dass der Fußabschnitt 8 an seiner Oberseite an beiden seitlichen Endbereichen Erhöhungen 15 hat, die beim Einschieben in die Taschen 14 hinter nach unten weisende hakenförmige Ansätze 16 an der Bodenplatte 1 einschnappen.

Wie bereits oben erwähnt, sind einige Erhebungen 2a mit inneren Domen 3 versehen, in die ein Loch 17 in der Oberseite der Erhebungen 2a führt. An diesen Domen 3 können Einbauten des Schachtes befestigt werden, indem selbstschneidende Kunststoffschrauben in die Dome eingeschraubt werden. Die Figuren 7 und 8 zeigen einen Anschraubpunkt von oben und von unten.

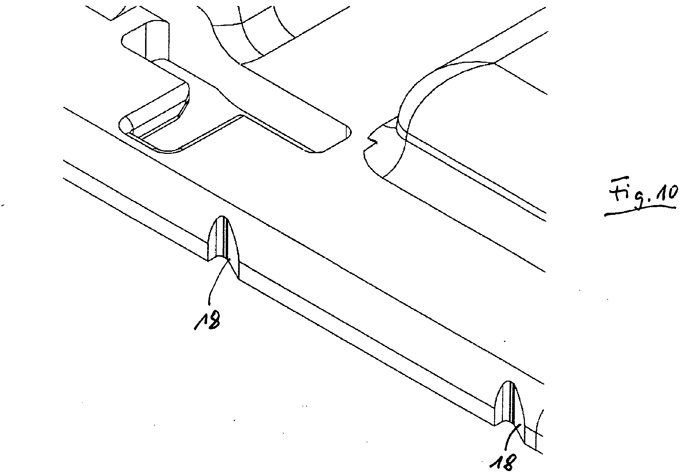

Figur 10 zeigt in einer stark vergrößerten Darstellung, dass an den Rändern der Bodenplatte rechtwinklige Kerben 18 ausgebildet sein können, die als Anschlag für Sägeblätter dienen, wenn die Bodenplatte auf das jeweilige Maß des zugehörigen Kunststoffschachtes zugesägt werden soll.

Dabei kann es auch notwendig werden, zwei Bodenplatten zusammenzusetzen. Figur 9 zeigt, dass in diesem Fall Aussparungen 19 am Rand der Erhebungen 1 ausgebildet sind, in die flache Verbindungselemente 20 eingesetzt werden, die mit Hilfe einer Nietung 21 durch ein Loch in der Erhebung 2 befestigt werden.

## Patentansprüche

1. Schacht mit Schachtwänden und mit einer viereckigen Bodenplatte (1), die an ihrer Oberseite eine Vielzahl von über ihre Fläche verteilte innen hohle Erhebungen (2) und an ihren Randbereichen jeweils wenigstens eine taschenartige Aussparung aufweist, in die jeweils ein Fußabschnitt (8) einer Befestigungslasche (5) eingeschoben ist, die am unteren Randbereich der Schachtwände (4) mit Befestigungsmitteln (15) befestigt ist, wobei die Befestigungslaschen (5) jeweils einen ringförmigen Abschnitt (6) haben, **dadurch gekennzeichnet, dass** der ringförmige Abschnitt (6) über einen mittigen Verbindungsabschnitt (7) mit dem Fußabschnitt (8) verbunden ist, der eine flügelartige Form hat, und dass die taschenartige Aussparung (10) etwas größer als der Fußabschnitt (8) ist, wobei die Aussparung (10) sich in einen anschließenden ebenfalls oben offenen, mittigen Abschnitt (11) fortsetzt, der etwas breiter als der mittige Verbindungsabschnitt (7) ist, und wobei rechts und links von dem Abschnitt (11) getrennt beidseitig Taschen (14) in der Bodenplatte (1) ausgebildet sind, die insgesamt dieselbe Breite wie die Aussparung (10) haben und die unter die Bodenplatte (1) führen, so dass der Fußabschnitt (8) in die beiden Taschen (14) einschiebbar ist.

2. Schacht nach Anspruch 1,
**dadurch gekennzeichnet,**
**dass** die Erhebungen (2) eine rechteckige Quaderform mit gerundeten Kanten haben.

3. Schacht nach einem der Ansprüche 1 bis 2,
**dadurch gekennzeichnet,**
**dass** die Fußabschnitte (8) der Befestigungslaschen (5) in der eingeschobenen Endposition in die Bodenplatte (1) einrasten.

4. Schacht nach einem der Ansprüche 1 bis 3,
**dadurch gekennzeichnet,**
**dass** der ringförmige Abschnitt (6) von einem Kunststoffdübel (15) durchgriffen wird, der in ein Loch in der Schachtwand (4) eingeschlagen wird.

5. Schacht nach einem der Ansprüche 1 bis 4,
**dadurch gekennzeichnet,**
**dass** wenigstens eine Erhebung (2a) mit einem inneren Dom (3) versehen ist, an dem Einbauten im Schachtinneren mithilfe einer selbstschneidenden Kunststoffschraube befestigbar sind.

6. Schacht nach einem der Ansprüche 1 bis 5,
**dadurch gekennzeichnet,**
**dass** die Bodenplatte (1) im Spritzgießverfahren vorzugsweise aus PC oder PP hergestellt ist.

7. Schacht nach einem der Ansprüche 1 bis 6,
**dadurch gekennzeichnet,**
**dass** an den Rändern der Bodenplatte (1) rechtwinklige Kerben (18) als Anschlag für Sägeblätter verschiedener Dicke ausgebildet sind, mit denen die Bodenplatte (1) auf ein gewünschtes Maß gesägt werden kann.

## Claims

1. A shaft with shaft walls and with a rectangular base plate (1), which has a plurality of internally hollow protuberances (2) on its upper surface distributed over its area and has at least one respective pocket-shaped opening at its edge regions, into which a respective foot section (8) on a fastening lug (5) is inserted, which is secured to the lower end region of the shaft walls (4) with fastening means (15), wherein the fastening lugs (5) each have an annular section (6), **characterised in that** the annular section (6) is connected by means of a central connecting section (7) to the foot section (8), which has a wing-like shape, and that the pocket-like opening (10) is somewhat larger than the foot section (8), wherein the opening (10) continues into an adjoining central section (11), which is also open at the top and which is somewhat wider than the central connecting section (7) and wherein formed in the base plate (1) to the right and left of the section (11) separated on both sides there are pockets (14), which overall have the same width as the opening (10) and which lead beneath the base plate (1) so that the foot section (8) may be slid into both pockets (14).

2. A shaft as claimed in Claim 1, **characterised in that** the protuberances (2) have a rectangular block shape with rounded edges.

3. A shaft as claimed in one of Claims 1 to 2, **characterised in that** the foot sections (8) of the fastening lugs (5) lock into the base plate (1) in the inserted end position.

4. A shaft as claimed in one of Claims 1 to 3, **characterised in that** a plastic peg (15), which is knocked into a hole in the shaft wall (4), passes through the annular section (6).

5. A shaft as claimed in one of Claims 1 to 4, **characterised in that** at least one protuberance (2a) is provided with an internal dome (3), to which fittings in the interior of the shaft may be fastened with the aid of a self-tapping plastic screw.

6. A shaft as claimed in one of Claims 1 to 5, **characterised in that** the base plate (1) is manufactured in an injection moulding process, preferably from PC or PP.

7. A shaft as claimed in one of Claims 1 to 6, **characterised in that** formed at the edges of the base plate (1) there are right angled notches (18) constituting a stop for saw blades of different thickness, with which the base plate (1) can be sawn to a desired size.

## Revendications

1. Puits avec parois de puits et avec une plaque de fond rectangulaire (1), qui présente sur sa face supérieure une pluralité de parties surélevées creuses intérieures (2) réparties sur sa surface et sur ses zones de bord respectivement au moins un évidement de type poche, dans lequel est insérée respectivement une section de pied (8) d'une patte de fixation (5), qui est fixée sur la zone de bord inférieure des parois de puits (4) par des moyens de fixation (15), dans lequel les pattes de fixation (5) présentent chacune une section annulaire (6), **caractérisé en ce que** la section annulaire (6) est reliée à la section de pied (8), qui a une forme d'aile, par une section de liaison centrale (7), et que l'évidement (10) en forme de poche est légèrement plus grand que la section de pied (8), dans lequel l'évidement (10) se prolonge dans une section centrale (11) également ouverte en haut consécutive qui est légèrement plus large que la section de liaison centrale (7), et dans lequel à droite et à gauche de la section (11) des poches (14) séparées des deux côtés sont formées dans la plaque de fond (1), qui ont au total la même largeur que l'évidement (10) et qui passent sous la plaque de fond (1), de telle sorte que la section de pied (8) peut être insérée dans les deux poches (14).

2. Puits selon la revendication 1,
**caractérisé en ce**
**que** les parties surélevées (2) présentent une forme de parallélépipède rectangle avec des bords arrondis.

3. Puits selon l'une quelconque des revendications 1 et 2,
**caractérisé en ce**
**que** les sections de pied (8) des pattes de fixation (5) s'enclenchent dans la plaque de fond (1) dans la position finale rentrée.

4. Puits selon l'une quelconque des revendications 1 à 3,
**caractérisé en ce**
**que** la section annulaire (6) est saisie par une cheville en plastique (15) qui est enfoncée dans un trou dans la paroi de puits (4).

5. Puits selon l'une quelconque des revendications 1 à 4,
**caractérisé en ce**
**qu'**au moins une partie surélevée (2a) est pourvue d'un dôme intérieur (3) sur lequel des éléments de montage à l'intérieur du puits peuvent être fixés à l'aide d'une vis en plastique autotaraudeuse.

6. Puits selon l'une quelconque des revendications 1 à 5,
**caractérisé en ce**
**que** la plaque de fond (1) est fabriquée de préférence en PC ou PP dans le procédé de moulage par injection.

7. Puits selon l'une quelconque des revendications 1 à 6,
**caractérisé en ce**
**que** des encoches perpendiculaires (18) sont formées sur les bords de la plaque de fond (1) comme butée pour des lames de scie de différentes épaisseurs, avec lesquelles la plaque de fond (1) peut être sciée à la dimension souhaitée.
